# EUROPEAN PATENT SPECIFICATION

(11) **EP 0 556 955 B1**
(45) Date of publication and mention of the grant of the patent: **13.03.1996**
(21) Application number: 93300421.0
(22) Date of filing: 21.01.1993
(51) Int. Cl.: C08L 61/10, C08G 8/10

(54) **Alkaline resol phenol-aldehyde resin binder compositions**
Alkalisches Resol-Phenol-Aldehyd-Harz-Bindemittel
Compositions de liants de résine phénol-aldéhyde résol alcaline

(30) Priority: 15.02.1992 GB 9203260
(43) Date of publication of application: 25.08.1993
(73) Proprietor: FOSECO INTERNATIONAL LIMITED, Nechells Birmingham B7 5JR (GB)
(72) Inventor: Smith, Garry, Sutton Coldfield, West Midlands, B74 2AY (GB)
(74) Representative: Eyles, Winifred Joyce

(56) References cited:
- EP-A- 0 027 333
- EP-A- 0 159 605
- EP-A- 0 323 096
- WO-A-89/06576
- DE-A- 3 527 086
- GB-A- 2 037 787

## Description

This invention relates to alkaline resol phenol-aldehyde binder compositions and their use in the production of articles of bonded particulate material such as foundry moulds or cores.

European Patent Application Publication No. 0323096A describes a binder composition comprising an alkaline aqueous solution of a resol phenol-aldehyde resin and an oxyanion which can form a stable complex between the resin and the oxyanion. EP 0323096A also describes a process for the production of an article of bonded particulate material, such as a foundry mould or core, in which a mixture of particulate material and the binder composition is formed to a desired shape, and carbon dioxide gas is then passed through the formed shape so as to cause the oxyanion to form a stable complex with the resin and thereby to cure the resin.

It has now been found that the performance of the binder composition can be improved if the binder composition also contains a propylene glycol alkyl ether.

According to the present invention there is provided a binder composition comprising an alkaline aqueous solution of a resol phenol-aldehyde resin and an oxyanion which can form a stable complex with the resin, the amount of alkali present in the solution being sufficient to substantially prevent stable complex formation between the resin and the oxyanion, wherein the binder composition also contains a propylene glycol alkyl ether in an amount such that the propylene glycol alkyl ether is miscible with the aqueous solution.

According to a further feature of the invention there is provided a process for the production of an article of bonded particulate material comprising forming to the desired shape a mixture of particulate material and a binder composition comprising an alkaline aqueous solution of a resol phenol-aldehyde resin, an oxyanion which can form a stable complex with the resin, and a propylene glycol alkyl ether in an amount such that the propylene glycol alkyl ether is miscible with the aqueous solution, and passing carbon dioxide gas through the formed shape so as to cause the oxyanion to form a stable complex with the resin, and thereby to cure the resin.

The binder composition and the process of the invention are of particular value for making foundry moulds and cores and it is with reference to that application that the invention will be described.

Suitable phenol-aldehyde resins and oxyanions for use in the binder compositions of the invention, and suitable methods for producing the phenol-aldehyde resin are described in EP 0323096A.

Suitable propylene glycol alkyl ethers are those which in the amounts needed to produce beneficial effects on the performance of the binder composition are miscible with the aqueous binder solution. Examples of suitable propylene glycol alkyl ethers are propylene glycol methyl ether, dipropylene glycol methyl ether, tripropylene glycol methyl ether, and propylene glycol ethyl ether. As the chain length of the propylene glycol alkyl ether increases the propylene glycol alkyl ether becomes more hydrophobic. As a result certain propylene glycol alkyl ethers are immiscible with the aqueous binder solution at all addition levels, and other propylene glycol alkyl ethers of shorter carbon chain length are only miscible with the aqueous binder solution at low addition levels. For example tripropylene glycol methyl ether is immiscible with the aqueous binder solution when used in an amount of 5% by weight based on the weight of the binder composition.

The amount of propylene glycol alkyl ether used is therefore dependent on the chemical composition of the particular propylene glycol alkyl ether, and is usually in the range of 1% - 10% by weight based on the weight of the binder composition.

The presence of the propylene glycol alkyl ether may have one or more beneficial effects on the performance of the binder composition as a binder for making foundry moulds and cores, depending on the composition of the particular resin and the propylene glycol alkyl ether used.

The beneficial effects include:-
(i) improved mould or core strength immediately after gassing with carbon dioxide gas.
(ii) improved strength after gassed moulds or cores have been stored before use, for example for up to 24 hours or longer.
(iii) improved strength of moulds or cores which have been coated with an alcohol based coating which has been dried by burning off the alcohol, prior to storage of the moulds or cores.
(iv) improved mixed sand flowability.
(v) improved mould or core surface finish and edge hardness.

Although an addition of 2% to 5% of the propylene glycol alkyl ether based on the weight of the binder composition will often suffice to produce the above benefits it has been found that further benefits in terms of improved storage properties, particularly transverse strength of cores and moulds, can be obtained at higher amounts in the range of 6% - 10% using a propylene glycol alkyl ether such as dipropylene glycol methyl ether.

The binder composition of the invention preferably also contains a silane such as gammaaminopropyltriethoxysilane, N-(2-aminoethyl)-3-aminopropyltrimethoxysilane, phenol trimethoxysilane or gammaglycidoxypropyltrimethoxysilane usually in an amount of 0.2% to 1.0% by weight based on the weight of the binder composition.

The following Examples will serve to illustrate the invention:-

### EXAMPLE 1

A resol phenol-formaldehyde resin was synthesised using the following composition:-

| | |
|---|---|
| phenol | 800.00g |
| 91% w/w paraformaldehyde | 642.20g |
| 50% w/w sodium hydroxide solution | 40.85g |
| F:P molar ratio | 2.3:1 |
| OH :P molar ratio | 0.06:1 |
| Water in starting composition | 5.2% W/W |

The following procedure was used:-
1. Charge and melt phenol
2. Charge paraformaldehyde and part of the sodium hydroxide solution and heat to 60 - 65°C at a rate of 1°C per minute
3. Cool to counteract exothermic reaction and maintain at 60 - 65°C while adding the remainder of the sodium hydroxide solution over a period of 1 hour
4. Heat to 75°C at a rate of 1°C per minute
5. Maintain at 75°C for 30 minutes
6. Heat to 85°C at a rate of 1°C per minute
7. Maintain at 85°C for sufficient time for the resin to reach a viscosity of 4000 - 6000 cp at 25°C as measured on a 25g sample diluted with 15g of 50% w/w potassium hydroxide solution using Paint Research Association Bubble Viscosity Tubes.

The resin was used to produce a base binder (1) having the following composition by weight:-

| | |
|---|---|
| resin | 25 parts |
| 50% w/w potassium hydroxide solution | 35 parts |
| borax | 5.5 parts |
| gammaaminopropyltriethoxysilane | 0.39 parts |

The potassium hydroxide solution was added to the resin, the temperature rise due to exothermic reaction was controlled to keep the temperature below 55°C and the resin was cooled. The borax was added and mixed into the resin until it had dissolved. The silane was then added at a temperature of below 30°C.

Base binder (1) had a potassium hydroxide to phenol molar ratio of 2.0:1.

Binder compositions 2 - 9 were prepared from some of the base binder 1 by adding the following propylene glycol alkyl ethers to base binder 1 at addition levels of 2 parts by weight and 5 parts by weight of the propylene glycol alkyl ether (PGAE) to 98 parts by weight and 95 parts by weight of base binder 1:-

| BINDER | PROPYLENE GLYCOL ALKYL ETHER |
|---|---|
| 2,3 | Propylene glycol methyl ether (PGME) |
| 4,5 | Dipropylene glycol methyl ether (DPGME) |
| 6,7 | Tripropylene glycol methyl ether (TPGME) |
| 8,9 | Propylene glycol ethyl ether (PGEE) |

Binder 7 was not tested because at the 5% by weight addition level the tripropylene glycol methyl ether was immiscible with the base binder. All the other binders were tested as binders for foundry sand using the following procedure:-

3% by weight of the binder based on the weight of sand was mixed with Chelford 60 silica sand (AFS Fineness No. 62) and the mixture was used to prepare standard AFS 50 mm X 50 mm diameter cylindrical cores. The sand temperature was 19°C. The cores were hardened by the passage of carbon dioxide gas for various times at, 0.35 kg/cm line pressure and 6.0 litres per minute flow rate.

Some of the cores were tested immediately after gassing on a George Fischer Universal Strength Machine Type PFA fitted with a High-Dry Compressive Strength Attachment Type PHD and some were tested after storage for 24 hours in dry storage conditions (temperature 18 - 20°C, relative humidity 40 - 55%).

The results obtained are tabulated in Tables 1 and 2 below.

**TABLE 1**

| | | | AS GASSED COMPRESSION STRENGTH (kg/cm) | | |
|---|---|---|---|---|---|
| GASSING TIME | | | 30S | 60S | 120S |
| BINDER | PGAE | WT% | | | |
| | | | | | |
| 1 | - | - | 10.4 | 12.7 | 14.6 |
| 2 | PGME | 2 | 11.5 | 13.3 | 17.8 |
| 3 | PGME | 5 | 14.2 | 13.5 | 15.4 |
| 4 | DPGME | 2 | 11.8 | 14.1 | 16.9 |
| 5 | DPGME | 5 | 14.0 | 14.8 | 17.0 |
| 6 | TPGME | 2 | 11.1 | 13.6 | 14.2 |
| | | | | | |
| 8 | PGEE | 2 | 11.5 | 13.5 | 16.8 |
| 9 | PGEE | 5 | 11.7 | 15.6 | 18.0 |

**TABLE 2**

| | | | 24 HOURS STORAGE COMPRESSION STRENGTH (kg/cm) | | |
|---|---|---|---|---|---|
| GASSING TIME | | | 30S | 60S | 120S |
| BINDER | PGAE | WT% | | | |
| 1 | - | - | 16.9 | 18.2 | 18.5 |
| 2 | PGME | 2 | 18.7 | 21.6 | 22.4 |
| 3 | PGME | 5 | 18.4 | 20.7 | 21.7 |
| 4 | DPGME | 2 | 25.0 | 28.5 | 28.9 |
| 5 | DPGME | 5 | 30.0 | 27.4 | 28.0 |
| 6 | TPGME | 2 | 22.9 | 22.6 | 24.9 |
| 8 | PGEE | 2 | 18.4 | 20.9 | 22.8 |
| 9 | PGEE | 5 | 21.0 | 17.5 | 22.5 |

In general all the propylene glycol alkyl ethers gave improved core strength immediately after gassing while in terms of strength after storage of the cores dipropylene glycol methyl ether was the most beneficial.

### EXAMPLE 2

An aqueous resol phenol-formaldehye resin was synthesised using the following composition:-

| | |
|---|---|
| phenol | 800.00g |
| 91% w/w paraformaldehyde | 561.00g |
| 50% w/w sodium hydroxide solution | 30.75g |
| F:P molar ratio | 2.0:1 |
| OH:P molar ratio | 0.045:1 |

The procedure used was as described in Example 1.

The resin was used to produce a base binder having the following composition by weight as described in Example 1:-

| | |
|---|---|
| resin | 25 parts |
| 50% w/w potassium hydroxide solution | 25 parts |
| borax | 5.6 parts |
| gammaaminopropyltriethoxysilane | 0.35 parts |

The base binder had a potassium hydroxide to phenol molar ratio of 1.5:1.

Binder compositions 10 to 12 were prepared from the base binder by adding 4.6 parts, 6.0 parts and 7.5 parts by weight of dipropylene glycol methyl ether to 95.4 parts, 94.0 parts and 92.5 parts by weight respectively of the base binder.

Binders 10, 11 and 12 had viscosities of 810 cp, 840 cp and 870 cp when measured on a Brookfield viscometer, Model LVF, spindle 3, spindle speed 60 rpm.

The binders were tested as binders for foundry sand using the following procedure:-

3% by weight of the binder based on the weight of sand was mixed with Chelford 60 silica sand and the mixture was used to prepare standard AFS 22.4 mm x 22.4 mm x 172 mm cores. The sand temperature was 19°C. The cores were hardened by the passage of carbon dioxide gas for various times at 0.35kg/cm line pressure and 6.0 litres per minute flow rate.

Some of the cores were tested immediately after gassing by measuring their transverse strength on a George Fischer PFA Universal Sand Tester fitted with a PBV transverse attachment, and others were tested after storage for 48 hours under ambient conditions (temperature 5 - 15°C, relative humidity 50 - 70%) or after storage for 48 hours under high humidity conditions (temperature 30 - 32°C, relative humidity 65 - 90%).

The results obtained are tabulated in Table 3 below.

**TABLE 3**

| TRANSVERSE STRENGTH kg/cm | | | |
|---|---|---|---|
| Binder | 10 | 11 | 12 |

| As gassed | | | |
|---|---|---|---|
| 30s | 8.25 | 8.25 | 8.50 |
| 60s | 10.25 | 10.75 | 10.50 |
| 120s | 12.25 | 11.75 | 12.00 |

| Ambient Storage | | | |
|---|---|---|---|
| 30s | 12.75 | 15.00 | 16.25 |
| 60s | 13.75 | 16.75 | 15.75 |
| 120s | 14.50 | 16.75 | 17.25 |

| Humid Storage | | | |
|---|---|---|---|
| 30s | 7.50 | 8.75 | 9.00 |
| 60s | 7.75 | 9.50 | 10.00 |
| 120s | 7.75 | 10.00 | 11.00 |

The results show that increased amounts of dipropylene glycol methyl ether have little effect on the transverse strength of cores measured immediately after gassing but give significant improvement in strength when the cores have been stored.

## Claims

1. A binder composition comprising an alkaline aqueous solution of a resol phenol-aldehyde resin and an oxyanion which can form a stable complex with the resin, wherein the amount of alkali present in the solution is sufficient to substantially prevent stable complex formation between the resin and the oxyanion, characterised in that the binder composition also contains a propylene glycol alkyl ether in an amount such that the propylene glycol alkyl ether is miscible with the aqueous solution.

2. A binder composition according to Claim 1 characterised in that the propylene glycol alkyl ether is propylene glycol methyl ether, dipropylene glycol methyl ether, tripropylene glycol methyl ether or propylene glycol ethyl ether.

3. A binder composition according to Claim 1 or Claim 2 characterised in that the propylene glycol alkyl ether is present in an amount of 1% to 10% by weight based on the weight of the binder composition.

4. A binder composition according to Claim 3 characterised in that the propylene glycol alkyl ether is present in an amount of 2% to 5% by weight based on the weight of the binder composition.

5. A binder composition according to Claim 3 characterised in that the propylene glycol alkyl ether is present in an amount of 6% to 10% by weight based on the weight of the binder composition.

6. A binder composition according to any one of Claims 1 to 5 characterised in that the composition contains in addition a silane.

7. A binder composition according to Claim 6 characterised in that the silane is gamma aminopropyltriethoxysilane, N-(2-aminoethyl)-3-aminopropyltrimethoxysilane, phenol trimethoxysilane or gammaglycidoxypropyltrimethoxysilane.

8. A binder composition according to Claim 6 characterised in that the amount of silane present is from 0.2% to 1.0% by weight based on the weight of the binder composition.

9. A process for the production of an article of bonded particulate material in which a mixture comprising particulate material and a binder composition is formed to a desired shape and the binder composition is cured by passing carbon dioxide gas through the formed shape, characterised in that the binder composition used is a composition according to any one of Claims 1 to 8.

## Patentansprüche

1. Binderzusammensetzung, enthaltend eine alkalische wäßrige Lösung eines Resol-Phenol-Aldehyd-Harzes und eines Oxyanions, das mit dem Harz einen stabilen Komplex bilden kann, wobei die Menge des in der Lösung vorliegenden Alkalis ausreichend ist, um im wesentlichen die Bildung eines stabilen Komplexes zwischen dem Harz und dem Oxyanion zu verhindern, dadurch gekennzeichnet, daß die Binderzusammensetzung auch einen Propylenglykolalkylether in einer solchen Menge enthält, daß er mit der wäßrigen Lösung mischbar ist.

2. Binderzusammensetzung nach Anspruch 1, dadurch gekennzeichnet, daß der Propylenglykolalkylether Propylenglykolmethylether, Dipropylenglykolmethylether, Tripropylenglykolmethylether oder Propylenglykolethylether ist.

3. Binderzusammensetzung nach Anspruch 1 oder 2, dadurch gekennzeichnet, daß der Propylenglykolalkylether in einer Menge von 1 bis 10 Gew.-%, bezogen auf das Gewicht der Binderzusammensetzung, vorliegt.

4. Binderzusammensetzung nach Anspruch 3, dadurch gekennzeichnet, daß der Propylenglykolalkylether in einer Menge von 2 bis 5 Gew.-% , bezogen auf das Gewicht der Binderzusammensetzung, vorliegt.

5. Binderzusammensetzung nach Anspruch 3, dadurch gekennzeichnet, daß der Propylenglykolalkylether in einer Menge von 6 bis 10 Gew.-% , bezogen auf das Gewicht der Binderzusammensetzung, vorliegt.

6. Binderzusammensetzung nach einem der Ansprüche 1 bis 5, dadurch gekennzeichnet, daß die Zusammensetzung zusätzlich ein Silan enthält.

7. Binderzusammensetzung nach Anspruch 6, dadurch gekennzeichnet, daß das Silan γ-Aminopropyltriethoxysilan, N-(2Aminoäthyl)-3-aminopropyltrimethoxysilan, Phenoltrimethoxysilan oder γ-Glycidoxypropyltrimethoxysilan ist.

8. Binderzusammensetzung nach Anspruch 6, dadurch gekennzeichnet, daß die Menge des vorliegenden Silans 0,2 bis 1,0 Gew.-%, bezogen auf das Gewicht der Binderzusammensetzung, beträgt.

9. Verfahren zur Herstellung eines Gegenstandes aus gebundenem, teilchenförmigen Material, wobei ein Gemisch, das ein teilchenförmiges Material und eine Binderzusammensetzung enthält, in eine gewünschte Form gebracht und die Binderzusammensetzung durch Hindurchführen von Kohlen-dioxidgas durch die geformte Gestalt gehärtet wird, dadurch gekennzeichnet, daß die eingesetzte Binderzusammensetzung eine Binderzusammensetzung nach einem der Ansprüche 1 bis 8 ist.

## Revendications

1. Composition de liant comprenant une solution alcaline aqueuse d'une résine résol phénol-aldhéhyde et d'un oxyanion qui peut former un complexe stable avec la résine, dans laquelle la quantité d'alcalins présents dans la solution est suffisante pour empêcher de manière substantielle la formation de complexes stables entre la résine et l'oxyanion, caractérisée en ce que la composition de liant contient également un éther alkylique de propylèneglycol dans une quantité telle que l'éther alkylique de propylèneglycol est miscible avec la solution aqueuse.

2. Composition de liant selon la revendication 1, caractérisée en ce que l'éther alkylique de propylèneglycol est l'éther méthylique de propylèneglycol, l'éther méthylique de dipropylèneglycol, l'éther méthylique de tripropylèneglycol ou l'éther éthylique de propylèneglycol.

3. Composition de liant selon la revendication 1 ou la revendication 2, caractérisée en ce que l'éther alkylique de propylèneglycol est présent dans une quantité de 1 % à 10 % en poids, sur la base du poids de la composition de liant.

4. Composition de liant selon la revendication 3, caractérisée en ce que l'éther alkylique de propylèneglycol est présent dans une quantité de 2 % à 5 % en poids, sur la base du poids de la composition de liant.

5. Composition de liant selon la revendication 3, caractérisée en ce que l'éther alkylique de propylèneglycol est présent dans une quantité de 6 % à 10 % en poids, sur la base du poids de la composition de liant.

6. Composition selon l'une quelconque des revendications 1 à 5, caractérisée en ce que la composition contient en plus un silane.

7. Composition de liant selon la revendication 6, caractérisée en ce que le silane est le gamma-aminopropryltriéthoxysilane, le N-(2-aminoéthyl)-3-aminopropyltriméthoxysilane, le triméthoxysilane de phénol ou le gamma-glycidoxypropyltriméthoxysilane.

8. Composition de liant selon la revendication 6, caractérisée en ce que la quantité de silane présent est de 0,2 % à 1,0 % en poids, sur la base du poids de la composition de liant.

9. Procédé de production d'un article de matériau aggloméré sous forme de particules, dans lequel un mélange comprenant du matériau sous forme de particules et une composition de liant est façonné à une forme désirée, et dans lequel la composition de liant est mûrie par passage de dioxyde de carbone gazeux à travers la forme façonnée, caractérisé en ce que la composition de liant utilisée est une composition selon l'une quelconque des revendications 1 à 8.
